# EUROPEAN PATENT APPLICATION

(11) **EP 2 192 047 A1**
(43) Date of publication of application: **02.06.2010**
(21) Application number: 08831140.2
(22) Date of filing: 15.09.2008
(51) Int. Cl.: B65D 6/24

(54) **ASSEMBLABLE, DISASSEMBLABLE AND REUSABLE BOX**

(30) Priority: 13.09.2007 ES 200701878 U
(71) Applicant: Encaja Embalajes De Madera, S.l., 33920 Langreo Asturias (ES)
(72) Inventor: ALVAREZ LOPEZ, Jesus, 33207 Gijon - Asturias (ES)
(74) Representative: Garcia-Cabrerizo y del Santo, Pedro Maria
(86) International application number: PCT/ES2008/000592
(87) International publication number: WO 2009/034213

(57) **Abstract**

MOUNTABLE, DEMOUNTABLE AND REUSABLE BOX

Mountable, demountable and reusable box, of those consisting of wood boards or any other similar material employing grooves on the boards and metal clamps, which can be inserted in said grooves for joining the boards to each other, forming straight dihedron, such that they are properly assembled.

## Description

The present invention, which is intended to be protected as a utility model, has as an object a mountable, demountable box and reusable as many times as desired and which intends to substitute the standard boxes, constructed based on wood boards nailed together by means of nails, which technique makes the assembly complicated, makes the disassembly difficult and, in practice, makes impossible the reutilization of the boxes.

### BACKGROUND OF THE INVENTION:

Until now, there are mountable, demountable and reusable boxes, which usually employ metal screws, special wood pieces or rods made of different materials and configurations for joining its constituent panels

In most of these embodiments, the operations of assembly and disassembly of the boxes are not easy, and in many cases they demand for its carrying out the employment of specific tools which are not always available.

Moreover, during them usually is not possible to fill up the boxes if they don't have their base and side boards previously mounted, which can make the filling or emptying operations quite cumbersome, which would be se significantly simplified if it was possible to place the load over the basic board, without having the side boards mounted, or to remove the load without the presence of these constituent elements of the box.

### DESCRIPTION OF THE INVENTION:

In order to prevent all these problems, the invention described and claimed herein proposes the use of boards, provided with perimeter grooves made near their edges, as well as of some L-shaped anchor metal clamps, with their ends bent 90° inwards, such that these bent parts can be fitted in the grooves of two perpendicular boards, and thus join them in a steady and safe manner.

The necessary boards for each box (base, side walls and lid) are easy to build in factory, since it is enough to perimetrally groove standard boards. Likewise, the necessary clamps are easy to manufacture from sheet narrow strips, being enough to cut and bend them conveniently in the noted manner.

With these pieces, the mounting, dismantling and the reuse of the boxes is very simple, since they can be returned dismantled to source, by stacking and baling the boards forming them, with a significant reduction of the volume occupied by the boxes with respect to the one they gage when they are mounted.

Eventually and for the cases wherein is intended to reinforce the safety of the corresponding mounting of the boxes in view of probably accidental or fraudulent dismantling thereof, at each one of the wings of the clamps, a through hole for nailing or screwing thereof to the boards has been provided, although part of the advantages that the aforementioned simple process of assembly and disassembly of the boxes are lost.

### DESCRIPTION OF THE DRAWINGS:

For a better understanding of all that has been described so far, a page with drawings, corresponding to a preferred embodiment of the invention is included, wherein it can be observed the following:
In figure 1, a perspective view of a box mounted with its scored boards.

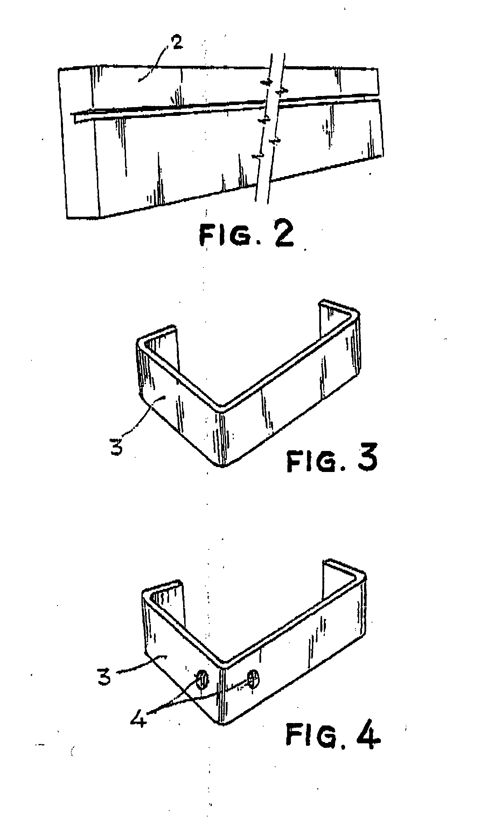

In figure 2, a detail of the scored boards.
In figure 3, one of the L-bent metal clamps, with kinked ends at 90°, used for the mounting of the boxes,
In figure 4, one of the metal clamps, wherein the through holes intended for the nails or the screws, to be used at possible attachments of reinforced nature, of the clamps to the boards.
On them, the different elements are designated with the following numeric references:
   1.- Box mounted with its clamps,
   2.- Board with its grooves
   3.- L-bent metal clamp,
   4.- Through holes

### PREFERRED EMBODIMENT OF THE INVENTION:

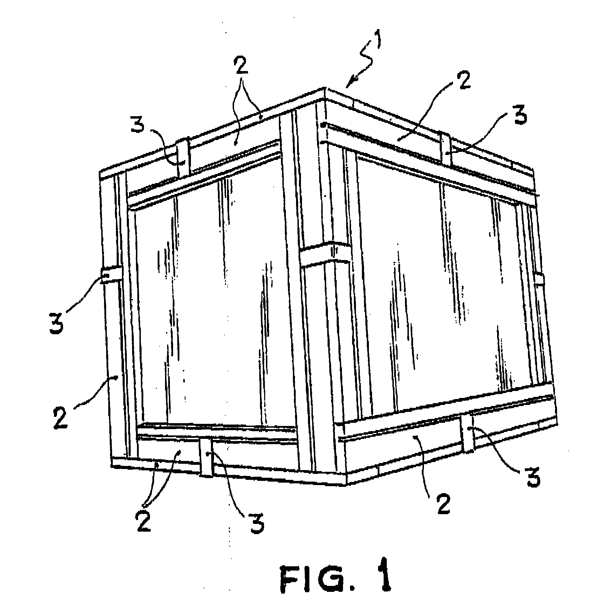

The box of the invention (1) is mounted based on six scored boards (2) for its base, lateral sides and lid and, at least, with one dozen of L-bent metal clamps (3), being as is shown in figure 1.

In order to open it and dismantling it, it is enough to slightly lever up the metal clamps and separate the boards (2), starting by the one acting as a lid and, if desired, continuing by the sides. Once the content of the box has been emptied, it can be returned to source by completely dismantling it, and stacking and baling the corresponding boards.

Once the box has been returned to source, it can be reused, loaded and mounted with the original metal clamps (3), or else using some new ones in the case that the first had been damaged or lost.

For the aforementioned exceptional cases, nails or screws that will be nailed or screwed to the boards across the through holes (4) made on the clamps will be utilized.

It is not considered necessary to expand more on this description in order for any skilled in the art to understand the extent of the present invention, as well as the technical effects and the new benefits that can be derived thereof.

The terms on which the present technical specification has been written should always be considered in the widest and less limiting sense resulting compatible with the essentiality of the invention being described and claimed therein.

## Claims

1. Mountable, demountable and reusable box, of the ones consisting of wood boards, or any other similar material, **characterized by** the employment of grooves on the boards and of metal clamps, which may be inserted in said grooves, for joining the boards to each other, forming straight dihedron, such that the constituents of the base, the four sides and the lid of the box are properly assembled.

2. Mountable, demountable and reusable box, according to claim 1, **characterized in that** the grooves, wherein the metal clamps are inserted, are arranged parallel and next to the four edges of each one of the six constituent boards of the box.

3. Mountable, demountable and reusable box, according to claims 1 and 2, **characterized in that** the metal clamps are made up of L-bent sheet strips and with its ends provided with short kinks at 90° and directed inwards.

4. Mountable, demountable and reusable box, according to claims 1, 2 and 3, **characterized in that** the wings of each clamp posses through holes, for possible nailing or screwing of the clamps to the boards, in those cases where is intended a reinforced assembly of the box.
